## Europäisches Patentamt
## European Patent Office
## Office européen des brevets

(19)

(11) Veröffentlichungsnummer: **0 023 587**
**B2**

(12) **NEUE EUROPÄISCHE PATENTSCHRIFT**

(45) Veröffentlichungstag der neuen Patentschrift:
**29.01.86**

(21) Anmeldenummer: **80103876.1**

(22) Anmeldetag: **08.07.80**

(51) Int. Cl.⁴: **C 01 B 33/18,** C 04 B 35/14,
E 04 B 1/74

(54) Temperaturstabilisiertes Siliciumdioxid-Mischoxid, das Verfahren zu seiner Herstellung und Verwendung.

(30) Priorität: **06.08.79 DE 2931810**

(43) Veröffentlichungstag der Anmeldung:
**11.02.81 Patentblatt 81/6**

(45) Bekanntmachung des Hinweises auf die Patenterteilung:
**12.05.82 Patentblatt 82/19**

(45) Bekanntmachung des Hinweises auf die Entscheidung
über den Einspruch:
**29.01.86 Patentblatt 86/5**

(84) Benannte Vertragsstaaten:
**AT BE CH DE FR GB IT LI LU NL SE**

(56) Entgegenhaltungen:
**DE - A - 2 153 671**
**DE - A - 2 702 896**
**DE - B - 1 542 359**
**DE - B - 2 167 118**
**US - A - 2 951 044**
**US - A - 3 055 831**
**US - A - 3 486 913**
**US - A - 3 950 259**

**Angewandte Chemie, 72 Jahrgang, Nr. 19/20 Seiten 744
bis 750**

(73) Patentinhaber: **Degussa Aktiengesellschaft,
Weissfrauenstrasse 9, D-6000 Frankfurt am Main 1 (DE)**

(72) Erfinder: **Kleinschmit, Peter, Dr., Wildaustrasse 19,
D-6450 Hanau 9 (DE)**
Erfinder: **Schwarz, Rudolf, Dr., Taunusstrasse 2,
D-8755 Alzenau (DE)**

EP 0 023 587 B2

**Beschreibung**

Synthetisches Siliciumdioxid wird in Form des Silika-Aerogels oder einer gefällten Kieselsäure als Bestandteil von Wärmedämm-Materialien verwendet.

So beschreibt die DE-B 2 036 124 eine Isolierplatte, die aus einer durchlässigen Hülle aus Glasfasergewebe oder Baumwolle besteht und Silika-Aerogel, welches mit einem Trübungsmittel wie Titandioxid vermischt ist, enthält.

Die DE-B 1 671 186 beschreibt ein Verfahren zur Herstellung eines Wärmeisoliermaterials, bestehend aus einem Aerogel auf Basis Kieselsäure, Aluminiumsilikatfasern und einem Trübungsmittel.

Diese bekannten Wärmedämm-Mischungen haben den Nachteil, dass ihre Anwendbarkeit durch die Temperaturinstabilität der $SiO_2$-Komponente erheblich begrenzt ist. So nimmt die spezifische Oberfläche beispielsweise einer pyrogenen Kieselsäure mit steigender Temperatur beginnend bei 550°C ständig ab und die Kieselsäurepartikel wachsen ab etwa 950°C, wodurch das gewünschte Wärmeisolationsvermögen drastisch abnimmt.

Gegenstand der Erfindung ist ein pyrogen hergestelltes, temperaturstabilisiertes Siliciumdioxid-Mischoxid mit einer BET-Oberfläche von 50 bis 400 m²/g, welche

0,01 bis 10 Gew.% Zirkondioxid oder
0,1 bis 10 Gew.% Eisenoxid

als Bestandteil enthält.

Als Eisenoxid kann das erfindungsgemässe Siliciumdioxid-Mischoxid $Fe_2O_3$ enthalten.

Das erfindungsgemässe Siliciumdioxid-Mischoxid kann bis auf eine Temperatur von 1150°C erhitzt werden, ohne dass eine Vergröberung der Oxidteilchen anhand elektronenoptischer Aufnahmen nachweisbar ist.

Ein weiterer Gegenstand der Erfindung ist das Verfahren zur Herstellung des pyrogen hergestellten temperaturstabilisierten Siliciumdioxid-Mischoxides mit einer BET-Oberfläche von 50 bis 400 m²/g, welches

0,01 bis 10 Gew.% Zirkondioxid oder
0,1 bis 10 Gew.% Eisenoxid

als Bestandteil enthält, welches dadurch gekennzeichnet ist, dass man Siliciumtetrachlorid verdampft, mit vorgewärmter Luft verdünnt, in eine an sich bekannte Brennervorrichtung einführt, dort in der Mischkammer mit Wasserstoff und mit dem dampfförmigen Chlorid des Eisens oder des Zirkons in einem derartigen Verhältnis, welches das entsprechend zusammengesetzte Siliciumdioxid-Mischoxid ergibt, vermischt, das 4-Komponentengemisch in einer Reaktionskammer verbrennt, mittels einer bekannten Vorrichtung das dabei erhaltene feste Siliciumdioxid-Mischoxid von den gasförmigen Reaktionsprodukten abtrennt und durch Erhitzen in feuchter Luft von anhaftendem Chlorwasserstoff befreit.

Ein weiterer Gegenstand der Erfindung ist die Verwendung des erfindungsgemässen pyrogen hergestellten, temperaturstabilen Siliciumdioxid-Mischoxides sowie des pyrogen hergestellten, temperaturstabilisierten Siliciumdioxid-Mischoxides mit einer BET-Oberfläche von 50 bis 400 m²/g, welches 0,1 bis 9,9 Gew.% Titandioxid enthält, zur Herstellung von Wärmedämm-Materialien.

Dabei können Wärmedämm-Mischungen verwendet werden, wie sie gemäss der DE-B 2 036 124 oder DE-B 1 671 186 beschrieben werden.

Das Siliciumdioxid-Mischoxid kann aber auch ohne weitere Zutaten in loser Schüttung für die Wärmedämmung verwendet werden.

Der Gegenstand der Erfindung wird anhand der folgenden Beispiele näher erläutert und beschrieben:

Beispiel 1
(Vergleichsbeispiel für mischoxidfreies $SiO_2$)

6,3 kg Siliciumtetrachlorid werden in einem Fallfilmverdampfer verdampft und mit 7,15 m³/h auf 120°C vorgewärmter Luft verdünnt. In der Mischkammer des bei der Herstellung pyrogener Stoffe üblicherweise verwendeten Brenners werden dem Dampf/Luft-Gemisch 2,1 m³ Wasserstoff beigegeben. Die homogene Mischung der drei Komponenten verlässt die Brennermündung mit einer Geschwindigkeit von etwa 40 m/sec und brennt in eine Reaktionskammer. Danach werden die Reaktionsprodukte in einem Kühlsystem auf ca. 130°C abgekühlt. Nach der Abtrennung der Kieselsäure von den flüchtigen Chlorwasserstoffenthaltenden Gasen in Filtern oder Zyklonen wird gegebenenfalls restlicher anhaftender Chlorwasserstoff durch nochmaliges Erhitzen in feuchter Luft auf ca. 600°C entfernt. Die Kieselsäure hat eine BET-Oberfläche von 300 m²/g und eine mittlere Grösse der Primärteilchen von 7 nm.

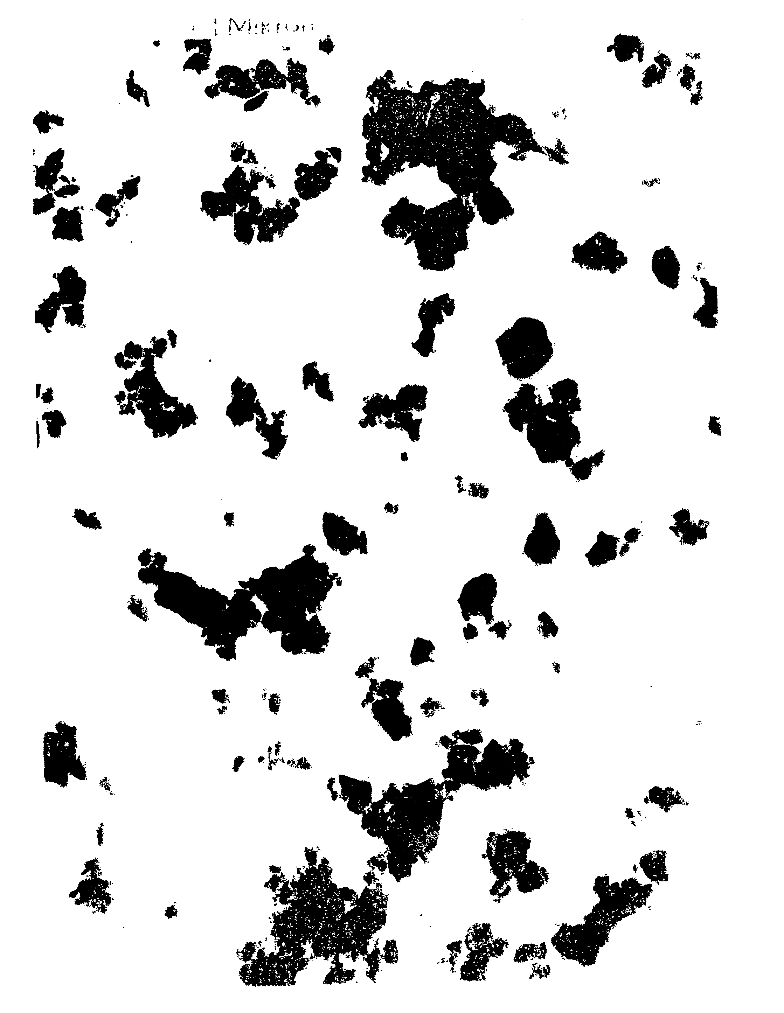

Wird dieses Produkt 3 Stunden bei 1000°C geglüht, so ist keine Teilchenvergrösserung festzustellen (vgl. REM-Aufnahme nach Fig. 1).

Wird dieses Produkt 3 Stunden lang auf 1150°C erhitzt, so ist danach die BET-Oberfläche auf 12 m²/g abgefallen und die mittleren Teilchendurchmesser liegen im Bereich zwischen 50 und 300 nm. Ausserdem ist das Glühgut erheblich zusammengesintert, wobei sich die Schüttdichte des wieder aufgelockerten Materials von 25 g/l auf 286 g/l erhöht hat. Infolge davon steigt auch die Wärmeleitfähigkeit im Vergleich zu einer ungeglühten Ware von $1,4 \times 10^{-2}$ W/m·°K auf $6,8 \times 10^{-2}$ W/m·°K, gemessen nach DIN 52 616 an einer Schüttung bei 80/20°C und einer Beschwerung von 15 g/cm².

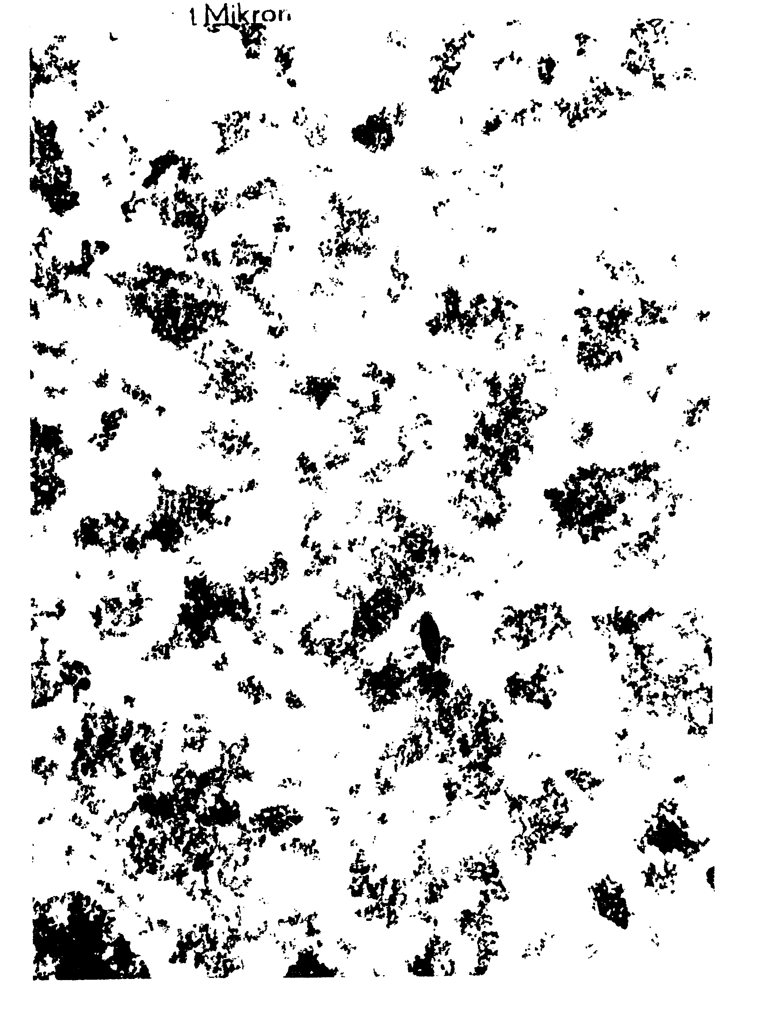

Die Teilchenvergrösserung kann der REM-Aufnahme nach Fig. 2 entnommen werden.

Beispiel 2
(gemäss Erfindung)

Man betreibt den Kieselsäure-Brenner unter den in Beispiel 1 angegebenen Bedingungen, bläst jedoch in die Mischkammer zusätzlich zu dem 3-Komponentengemisch 22,4 g/h Eisenchloriddampf mit einer Temperatur von 400°C ein. Die Ausströmungsgeschwindigkeit aus dem Brenner ändert sich durch diese kleine Menge an Zuschlagstoff nur geringfügig. Die erhaltene Kieselsäure ist durch den $Fe_2O_3$-Gehalt (0,5%) leicht rötlich gefärbt. Die spezifische BET-Oberfläche dieser $Fe_2O_3$-dotierten Kieselsäure liegt bei 300 m²/g. Durch dreistündiges Glühen auf 1150°C fällt sie nur auf 90 m²/g ab und die mittlere Primärteilchengrösse steigt lediglich geringfügig von 7 nm auf 12 nm an. Das Glühgut ist praktisch nicht gesintert und auch ohne Zerreibung weitgehend schüttfähig. Die Schüttdichte beträgt 65 g/l. Die Wärmeleitfähigkeit des geschütteten Materials ist nur von $1,43 \times 10^{-2}$ W/m·°K vor der Glühung auf $2,37 \times 10^{-2}$ W/m·°K nach der Glühung bei einer Beschwerung von 15 g/cm² angestiegen.

### Beispiel 3

Man verfährt wie in Beispiel 1 angegeben, mit dem Unterschied, dass man dem Brennergemisch 7,1 g $ZrCl_4$-Dampf/h zuspeist, den man durch kontinuierlichen Eintrag von $ZrCl_4$-Pulver mit Hilfe einer Mikrodosierschnecke in einem kleinen, auf 400°C elektrisch geheizten Verdampfer gemeinsam mit einer kleinen Traggasmenge erzeugt. Die erhaltene Kieselsäure enthält 0,2% Zirkonoxid und weist eine BET-Oberfläche von 296 m²/g auf. Nach einer 3stündigen Glühung des Materials bei 1150°C weist es eine spezifische BET-Oberfläche von immer noch 124 m²/g auf, und die mittlere Primärteilchengrösse hat sich lediglich von 7 auf 10 nm erhöht.

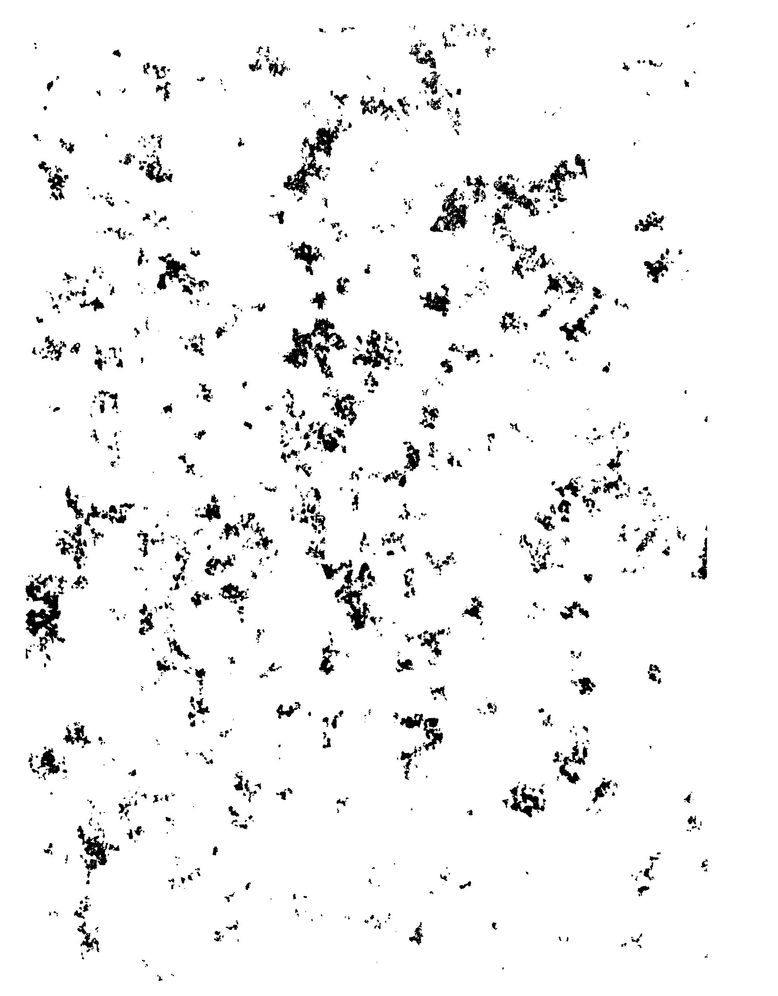

Dieses Produkt zeigt die REM-Aufnahme nach Fig. 3.

Im Glühgut sind keine Verbackungen feststellbar und die Schüttdichte hat sich durch die thermische Behandlung nur von 35 g/l auf 49 g/l geändert, desgleichen nur unwesentlich die Wärmeleitfähigkeit des geschütteten Gutes. Sie beträgt jetzt $2,3 \times 10^{-2}$ W/m·°K bei einer Beschwerung von 15 g/cm².

### Beispiel 4

Eine Kieselsäure, gemäss Beispiel 1 hergestellt, mit einer mittleren Primärteilchengrösse von 7 nm und 300 m²/g spezifischer Oberfläche wird nachträglich mit 0,5% pyrogenem hochdispersen Eisenoxid in einem Labormischer intensiv gemischt und 10 Stunden lang bei 900°C getempert. Glüht man diese Mischung anschliessend unter den gleichen Bedingungen gemäss Beispiel 1 bis 3, so erhält man ein Glühgut mit nur noch 14 m²/g spezifischer Oberfläche und einem Primärteilchendurchmesser von 50–280 nm. Das beweist, dass die nachträgliche Einmischung die Kieselsäure thermisch nicht stabilisiert.

Die Wärmeleitfähigkeit des Glühgutes liegt deshalb mit $6,3 \times 10^{-2}$ W/m·°K etwa gleich hoch wie das nach Beispiel 1 hergestellte und entsprechend geglühte Produkt.

### Patentansprüche

1. Pyrogen hergestelltes, temperaturstabilisiertes Siliciumdioxid-Mischoxid mit einer BET-Oberfläche von 50 bis 400 m²/g, welches

0,01 bis 10 Gew.% Zirkondioxid oder
0,1 bis 10 Gew.% Eisenoxid

als Bestandteil des Mischoxides enthält.

2. Verfahren zur Herstellung des pyrogen hergestellten, temperaturstabilisierten Siliciumdioxid-Mischoxides mit einer BET-Oberfläche von 50 bis 400 m²/g, welches

0,01 bis 10 Gew.% Zirkondioxid oder
0,1 bis 10 Gew.% Eisenoxid

als Bestandteil des Mischoxides enthält, dadurch gekennzeichnet, dass man Siliciumtetrachlorid verdampft, mit vorgewärmter Luft verdünnt, in eine an sich bekannte Brennervorrichtung einführt, dort in der Mischkammer mit Wasserstoff und mit dem dampfförmigen Chlorid des Eisens oder des Zirkons in einem derartigen Verhältnis, welches das entsprechend zusammengesetzte Siliciumdioxid-Mischoxid ergibt, vermischt, das 4-Komponenten-Gemisch in einer Reaktionskammer verbrennt, mittels einer bekannten Vorrichtung das dabei erhaltene feste Siliciumdioxid-Mischoxid von den gasförmigen Reaktionsprodukten abtrennt und durch Erhitzen in feuchter Luft von anhaftendem Chlorwasserstoff befreit.

3. Verwendung des pyrogen hergestellten, temperaturstabilisierten Siliciumdioxid-Mischoxides mit einer BET-Oberfläche von 50 bis 400 m²/g, welches

0,01 bis 10 Gew.% Zirkondioxid oder
0,1 bis 10 Gew.% Eisenoxid oder
0,1 bis 9,9 Gew.% Titandioxid

als Bestandteil des Mischoxides enthält, zur Herstellung von Wärmedämm-Mischungen.

### Claims

1. A pyrogenically produced temperaturestabilised silicon dioxide mixed oxide having a BET-surface of from 50 to 400 m²/g and containing

from 0.01 to 10% by weight of zirconium dioxide or
from 0.1 to 10% by weight of iron oxide

as part of the mixed oxide.

2. A process for producing the pyrogenic, temperaturestabilised silicon dioxide mixed oxide having a BET-surface of from 50 to 400 m²/g and containing

from 0.01 to 10% by weight of zirconium dioxide or

from 0.1 to 10% by weight of iron oxide

as part of the mixed oxide, characterised in that silicon tetrachloride is vaporised, diluted with preheated air, introduced into a burner known per se where it is mixed in the mixing chamber with hydrogen and with the vaporous chloride if iron or zirconium in a ratio calculated to give the silicon dioxide mixed oxide of corresponding composition, the four-component mixture is burnt in a reaction chamber, the silicon dioxide mixed oxide obtained is separated from the gaseous reaction products by means of a known apparatus and freed from adhering hydrogen chloride by heating in moist air.

3. The use of the pyrogenically produced, temperaturestabilised silicon dioxide mixed oxide having a BET-surface of from 50 to 400 m²/g and containing

from 0.01 to 10% by weight of zirconium dioxide or
from 0.1 to 10% by weight of iron oxide or
from 0.1 to 9.9% by weight of titanium dioxide

as part of the mixed oxide for the production of heat-insulating mixtures.

## Revendications

1. Oxyde mixte à base de silicium, rendu stable à la chaleur et obtenu par pyrogénation, présentant une aire spécifique BET de 50 à 400 m²/g, oxyde mixte caractérisé en ce qu'il contient en tant que parties constituantes 0,01 à 10% en poids de dioxyde de zirconium, ou 0,1 à 10% en poids d'oxyde de fer.

2. Procédé de fabrication d'un oxyde mixte à base de dioxyde de silicium, rendu stable à la chaleur et obtenu par pyrogénation, présentant une aire spécifique BET de 50 à 400 m²/g, contenant 0,01 à 10% en poids de dioxyde de zirconium, ou 0,1 à 10% en poids d'oxyde de fer en tant que parties constituantes de l'oxyde mixte, procédé caractérisé en ce qu'il consiste à vaporiser du tétrachlorure de silicium; à le diluer avec de l'air préchauffé; à l'introduire dans un dispositif à brûleurs connu; à le mélanger dans ce dispositif, dans la chambre de mélange, à de l'hydrogène et aux chlorures sous forme vapeur, de fer ou de zirconium selon une proportion donnant l'oxyde mixte à base de dioxyde de silicium ayant la composition voulue; à brûleur le mélange de 4 constituants dans une chambre de réaction; à séparer, à l'aide d'un dispositif connu, l'oxyde mixte à base de dioxyde de silicium, solide, obtenu précédemment des produits de réaction gazeux; et à extraire par chauffage dans l'air humide le chlorure d'hydrogène gazeux adhérent.

3. Utilisation de l'oxyde mixte à base de dioxyde de silicium, rendu stable à la chaleur et obtenu par pyrogénation, présentant une aire spécifique BET de 50 à 400 m²/g, oxyde mixte caractérisé en ce qu'il contient en tant que parties constituantes 0,01 à 10% en poids de dioxyde de zirconium, ou 0,1 à 10% en poids d'oxyde de fer, ou 0,1 à 9,9% en poids de dioxyde de titane, caractérisée en ce que cet oxyde mixte sert à fabriquer de mélanges isolantes thermiques.

1 Mikron